(19) Europäisches Patentamt

European Patent Office

Office européen des brevets

(11) **EP 1 172 876 A2**

(12) **EUROPÄISCHE PATENTANMELDUNG**

(43) Veröffentlichungstag:
**16.01.2002   Patentblatt 2002/03**

(51) Int Cl.⁷: **H01M 8/06**

(21) Anmeldenummer: **01116158.5**

(22) Anmeldetag: **04.07.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **11.07.2000  DE 10033594**

(71) Anmelder: **XCELLSIS GmbH**
**73230 Kirchheim/Teck-Nabern (DE)**

(72) Erfinder: **Keppeler, Berthold, Dr.**
**73277 Owen (DE)**

(74) Vertreter: **Kocher, Klaus-Peter Dipl.-Phys et al**
**Daimler-Benz Aktiengesellschaft Intellectual Property Management FTP-C 106**
**70546 Stuttgart (DE)**

(54) **Brennstoffzelle mit einer internen Reformierungseinheit**

(57) Die vorliegende Erfindung schafft eine Brennstoffzelle mit wenigstens einer internen Reformierungseinheit, wobei die Brennstoffzelle mindestens eine Einzelzelle enthält, die eine Elektrolytmembran, eine Anode und eine Kathode umfaßt, wobei die Einzelzelle mit der Reformierungseinheit in indirektem thermischen Kontakt steht. Die Elektrolytmembran umfaßt dabei ein kationenleitendes Material.

## Fig. 1

EP 1 172 876 A2

**Beschreibung**

Die vorliegende Erfindung betrifft eine Brennstoffzelle mit den Merkmalen des Oberbegriffes des Anspruchs 1.

Brennstoffzellen zur Energieversorgung von Wohnungen und Kraftfahrzeugen (Ullmann's Encyklopädie der technischen Chemie Band 12, S. 113-136, Verlag Chemie, Weinheim 1976) sind verstärkt Gegenstand zahlreicher Untersuchungen.

Brennstoffzellen erzeugen elektrische Energie durch Energie-Direktumwandlung aus chemischer Energie in Umkehrung der Wasserelektrolyse. Eine Brennstoffzelle weist dabei mindestens eine Einzelzelle auf, die aus zwei invarianten Elektroden (Kathode und Anode) besteht, zwischen denen sich ein invarianter Elektrolyt befindet. Die Brennstoffzelle liefert kontinuierlich Strom, indem eine zu oxidierende Substanz (Brennmittel), beispielsweise Wasserstoff, der Anode und ein Oxidationsmittel, beispielsweise Luft, der Kathode kontinuierlich zu- und die Oxidationsprodukte kontinuierlich abgeführt werden.

Es sind verschiedene Brennstoffzellentypen bekannt, die sich insbesondere durch die Natur ihres Elektrolyten unterscheiden, d.h. letztendlich durch die Art des Ions, das die Elektrizität durch den Elektrolyten transportiert. Dies hat auch Auswirkungen auf die Betriebstemperatur der Brennstoffzellen. So werden Brennstoffzellen (FC) mit Elektrolyten aus Schmelzkarbonat (MCFC) oder aus Oxidkeramiken (SOFC) im allgemeinen bei Temperaturen zwischen 600 und 1.050 °C betrieben. Brennstoffzellen mit alkalischen Elektrolyten (AFC), Elektrolyten aus Polymermembranen (PEMFC) oder Phosphorsäuren (PAFC) weisen demgegenüber Betriebstemperaturen zwischen 0 und 200 °C auf. Insbesondere Polymermembranen werden aufgrund ihres geringen Gewichts und ihrer einfachen Konfektionierung für verschiedenste Anwendungsgebiete verstärkt eingesetzt.

Brennstoffzellen werden üblicherweise mit Wasserstoff als Brennmittel betrieben, der nur schwer zu speichern ist. Deshalb wird Wasserstoff zumeist in Form flüssiger Kohlenwasserstoffverbindungen, worunter herkömmlicherweise auch Alkohole, Aldehyde, Ketone und dergleichen verstanden werden, gespeichert. Diese werden in einer Gaserzeugungseinheit in Wasserstoff und $CO_2$ gespalten.

Die Wasserstofferzeugung in einer Gaserzeugungseinheit läuft dabei im wesentlichen in Form zweier chemischer Reaktionen ab, die entweder einzeln für sich oder auch in Kombination durchgeführt werden können.

Die eine Reaktion wird als "Reformierungsreaktion" oder "Dampfreformierung" bezeichnet, die im Falle von Methanol als Wasserstoffspeicher entsprechend Gleichung (I) abläuft:

$$CH_3OH + x\, H_2O \rightarrow 3\, H_2 + x\text{-}1\, H_2O + CO_2 \qquad (I)$$

Die andere Reaktion wird als "partielle Oxidation" (POX) bezeichnet und läuft für Methanol gemäß Gleichung (II) ab:

$$CH_3OH + 1/2\, O_2 \rightarrow 2\, H_2 + CO_2 \qquad (II)$$

Die Kombination beider Reaktionen führt zu einer autothermen Betriebsweise.

Bei beiden Reaktionen entsteht über die "Wasserstoff-Shift"-Gleichgewichtsreaktion (III) neben Kohlendioxid auch gleichzeitig immer Kohlenmonoxid gemäß:

$$CO_2 + H_2 \leftrightarrow CO + H_2O \qquad (III)$$

Diese "parasitäre" Reaktion (III), die den entstehenden Wasserstoff teilweise wieder verbraucht, verschiebt sich bei hohen Temperaturen auf die rechte Seite der Reaktionsgleichung und vermindert die Wasserstoffausbeute. Außerdem entstehen größere Mengen an CO, das die Elektroden vergiftet und aus dem Gesamtprozeß aufwendig entfernt werden muß.

Die für eine Gaserzeugungseinheit benötigte Energie für die Wasserstoffgewinnung, insbesondere für die Reformierungsreaktion in einer Reformierungseinheit, kann auf unterschiedliche Weise der Gaserzeugungseinheit zugeführt werden.

Zum einen kann in einem katalytischen Brenner und/oder bei der selektiven CO-Reduzierung die nötige Wärme erzeugt werden. Es ist aber auch möglich, zuerst eine exotherme POX-Reaktion zu starten und anschließend die Reformierungsreaktion durchzuführen.

Der Stand der Technik offenbart für diesen Zweck auch Brennstoffzellen mit einem sogenannten "internen Reformer". Dabei wird die durch die exotherme Brennstoffzellenreaktion freiwerdende Wärme genutzt, um die Reformierungseinheit mit der für die Reformierungsreaktion nötigen Wärme zu versorgen. Dies kann mittels konstruktiv unterschiedlicher Anordnungen von Reformierungseinheit und Brennstoffzelle erreicht werden, die als "direkte interne Reformierung" und "indirekte interne Reformierung" bezeichnet werden.

So wird in der DE 198 15 209 A1 eine PEM-Brennstoffzelle beschrieben, die eine direkte interne Reformierungseinheit aufweist. Das bedeutet, daß die Reformierungseinheit in der Anodengaskammer der Brennstoffzelle angeordnet ist. Jedoch ist dabei der Reformierungskatalysator einem erhöhten Verschleiß bzw. einer Deaktivierung durch die Gase in der Anodenkammer ausgesetzt, so daß er nach relativ kurzen Betriebszeiten ausgetauscht werden muß. Darüber hinaus werden PEM-Brennstoffzellen allgemein bei ca. 80 °C betrieben, da sich bei höheren Temperaturen die Membran zersetzt. Dies jedoch führt zu einer verminderten Reaktionsgeschwindigkeit und damit zu einem geringen Umsatz. Problematisch ist weiterhin die Kontrolle der Reaktionstemperatur, die, wie vorstehend ausgeführt, bei Überschreiten eines Grenzwertes zur Zersetzung der Membran führt. So muß die Brennstoffzelle gekühlt werden, was zum einen ein zusätzliches Kühlsystem erfordert und zum anderen einen schlechten Brennstoffzellenwirkungsgrad zur Folge hat.

Aufgrund der Temperatursensibilität der Elektrolytmembran in PEM-Brennstoffzellen bestand in der Fachwelt das Vorurteil, daß bei derartigen Brennstoffzellen eine "indirekte interne Reformierung" nur unter Zwischenschaltung aufwendiger Kühlsysteme möglich ist, um die unterschiedlichen Temperaturniveaus zwischen Brennstoffzelle (ca. 80 °C) und Reformierungseinheit (ca. 250 bis 300 °C) auszugleichen.

Die US-PS 5 348 814 offenbart eine Brennstoffzelle mit einer Elektrolytmembran aus geschmolzenem Karbonat (MCFC) und mit einer indirekten internen Reformierungseinheit. Eine Reformierungseinheit ist in direktem wärmeleitenden Kontakt zwischen zwei Einzelzellen angeordnet. Dies soll im Hinblick auf eine hohe Reaktionsgeschwindigkeit eine möglichst hohe Betriebstemperatur von ca. 650 °C gewährleisten, so daß sich diese Anordnung nur bei hochtemperaturstabilen Brennstoffzellen mit Membranen aus geschmolzenem Karbonat (MCFC) oder aus Oxidkeramiken (SOFC) realisieren läßt. Oftmals ist bei dieser Variante der Reaktionsführung eine nachgeschaltete zusätzliche Gasreinigungseinheit oder ein CO-Brenner erforderlich.

Gasreinigungssysteme verursachen jedoch Probleme bei der automatisierten Prozeßsteuerung, vergrößern das Systemvolumen und die Masse einer Brennstoffzelle und benötigen teure edelmetallhaltige Katalysatoren. Außerdem verringern sie den Gesamtwirkungsgrad einer Gaserzeugungseinheit. Auch nach der Reinigung verbleiben stets größere Mengen an CO im System, die die Stromerzeugung durch Vergiftung der im allgemeinen Platin enthaltenden Brennstoffzellenelektroden beeinträchtigen.

Überraschenderweise wurde nun gefunden, daß die erfindungsgemäße Brennstoffzelle mit den Merkmalen des Anspruchs 1 die geschilderten Nachteile des Standes der Technik vermeidet.

Demnach ist wenigstens eine Einzelzelle mit einer kationenleitenden Elektrolytmembran in indirektem thermischen Kontakt mit wenigstens einer Reformierungseinheit angeordnet. Da eine kationenleitende Membran hinreichend temperaturstabil ist, kann die Abwärme der Einzelzelle direkt auf die Reformierungseinheit übertragen werden. Ein separater Kühlkreislauf ist damit nicht erforderlich. Die Brennstoffzellenabwärme kann direkt genutzt werden und geht nicht mehr verloren. Insgesamt wird damit der energetische System-Wirkungsgrad erhöht.

Der indirekte thermische Kontakt ermöglicht eine Absenkung der Betriebstemperatur der Reformierungseinheit. Dies ergibt zunächst einen geringeren "turn-over" (Umsatz pro Katalysatormenge) des Reformierungskatalysators, da die Reformierungsreaktion kinetisch kontrolliert ist. Die geringere Belastung und niedrigere Temperatur der Reaktionsführung führen jedoch zu einer deutlichen Verbesserung des Alterungsverhaltens des Reformierungskatalysators.

Der Begriff "Reformierungseinheit", wie er nachstehend verwendet wird, umfaßt dabei jede Vorrichtung, mit der sich aus einem wie vorstehend definierten Kohlenwasserstoff Wasserstoff gewinnen läßt.

Als "kationenleitend" wird ein Material definiert, das eine elektrisch leitende Verbindung zwischen der Anode und der Kathode einer Brennstoffzelle durch Kationenwanderung herstellen kann.

Unter "indirektem thermischen Kontakt" wird verstanden, daß die wenigstens eine Reformierungseinheit und wenigstens eine Brennstoffeinzelzelle in wärmeleitendem Kontakt räumlich benachbart zueinander angeordnet sind und sich zwischen Reformierungseinheit und Brennstoffeinzelzelle kein Kühlsystem befindet.

Vorteilhafterweise ist die Elektrolytmembran bis 300 °C stabil. Damit sind Betriebstemperaturen für eine erfindungsgemäße Brennstoffzelle in einem Temperaturbereich von 50 bis 300 °C, vorzugsweise von 100 bis 200 °C, möglich. Dies führt in der Reformierungseinheit gemäß Gleichung (III) zu einer geringeren Menge an entstehendem CO und vermindert gleichzeitig die Sensibilität der Elektroden in der Brennstoffzelle gegenüber CO.

Durch die Verminderung der CO-Austrittskonzentration der Reformierungseinheit entfällt ein nachgeschaltetes Gasreinigungssystem, beispielsweise mittels selektiver Oxidation, was zu einer Reduzierung des Gewichts und des Volumens des erfindungsgemäßen Brennstoffzellensystems führt.

Bevorzugt ist die Membran protonenleitend, so daß eine Vielzahl an einfach zugänglichen protonenleitenden Materialien eingesetzt werden kann.

In einer weiteren bevorzugten Ausgestaltung umfaßt die Elektrolytmembran ein Polymer. Ein Polymer dient gleichzeitig als Barriere gegenüber den im Anodenraum entstehenden Gasen, die ansonsten zur Kathode wandern würden. Darüberhinaus ist ein Polymer flexibel, weitgehend bruchfest und weist ein geringes Gewicht auf.

In einer weiteren bevorzugten Ausgestaltung umfaßt die Elektrolytmembran Kohlenstoff und/oder keramische Werkstoffe sowie Kombinationen dieser Werkstoffe. Derartige Membranen sind besonders temperaturstabil und können daher auch plötzlich auftretende Temperaturspitzen in der Brennstoffzelle ohne Gefahr der Zersetzung aushalten.

Von Vorteil ist, wenn eine Brennstoffeinzelzelle zwischen zwei Reformierungseinheiten angeordnet ist, so daß sich ein wärmetauscheranaloger Aufbau ergibt und der Wärmetransfer effizient erfolgt.

In einer anderen bevorzugten Ausführungsform ist zwischen zwei Brennstoffeinzelzellen eine Reformierungseinheit angeordnet. Auch bei dieser Variante ergibt sich ein wärmetauscheranaloger Aufbau und der Wärmetransfer der Einzelzellenabwärme zu der Reformierungseinheit erfolgt besonders effizient.

In einer weiteren bevorzugten Ausgestaltung ist die Brennstoffzelle derart konzipiert, daß die Reformierungseinheit sowohl für eine Dampfreformierungsreaktion gemäß Gleichung (I), wie auch für eine partielle Oxidationsreaktion (POX) gemäß Gleichung (II) verwendet werden kann. So kann bei einem Kaltstart der Brennstoffzelle die Reformierungseinheit zunächst als POX-Reaktor gemäß Gleichung (II) dienen, der die nötige Wärme erzeugt, damit die Brennstoffzelle auf Betriebstemperatur gelangen kann. Anschließend ist dann ein Übergang auf die Dampfreformierungsreaktion gemäß Gleichung (I) möglich. Der Kaltstart einer erfindungsgemäßen Brennstoffzelle wird damit wesentlich verkürzt.

Bevorzugt findet eine erfindungsgemäße Brennstoffzelle Verwendung in mobilen Systemen, beispielsweise Kraftfahrzeugen. Dies liegt an ihrem vorstehend geschilderten geringen Raumbedarf und an ihrem geringen Gewicht. Außerdem ist eine erfindungsgemäße Brennstoffzelle durch ihren Verzicht auf eine Gasreinigungseinheit im Hinblick auf Steuerung/Regelung und Dosierung wesentlich einfacher zu betreiben.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.

Fig. 1     zeigt eine schematische Ausführungsform einer erfindungsgemäßen Brennstoffzelle.

Fig. 2     zeigt ein Funktionsschema einer erfindungsgemäßen Brennstoffzelle.

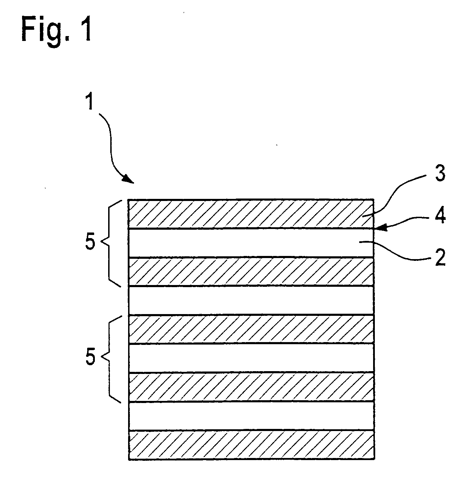

In Fig. 1 ist eine schematische Ausführungsform einer erfindungsgemäßen Brennstoffzelle 1 dargestellt. Diese besteht im wesentlichen aus einer Abfolge von mehreren Einheitszellen 5. Die Abfolge ist dabei bezüglich der Zahl der aufeinanderfolgenden Einheitszellen 5 beliebig und den jeweiligen Einsatzumständen angepaßt. Damit kann in einfacher Weise ein jeweils speziell adaptierter Zellstapel geschaffen werden. Jede Einheitszelle 5 besteht aus einer Einzelzelle 2, die zwischen zwei Reformierungseinheiten 3 angeordnet ist und mit diesen in indirektem thermischen Kontakt steht. In einer anderen bevorzugten Ausgestaltung besteht eine Einheitszelle 5 aus zwei Einzelzellen 2, zwischen denen eine Reformierungseinheit 3 angeordnet ist, die mit den Einzelzellen 2 in indirektem thermischen Kontakt steht. Der indirekte thermische Kontakt erfolgt über Kontaktbereiche 4. Der indirekte thermische Kontakt ist dabei beispielsweise in Form eines Wärmeaustauschers realisiert. Auch ein direkter, flächiger, wärmeleitender Kontakt ist möglich.

Die Einzelzelle 2 besteht im wesentlichen aus zwei invarianten Elektroden (Kathode und Anode), zwischen denen sich ein kationenleitender Elektrolyt befindet. Das Elektrodenmaterial umfaßt im wesentlichen ein oder mehrere Edelmetalle, ausgewählt aus der 1. und 2. sowie der 7. bis 10. Nebengruppe des Periodensystems der Elemente, beispielsweise Platin, Ruthenium oder ein oder mehrere dieser Metalle in Kombination mit Kohlenstoff und/oder modifiziertem Kohlenstoff. Der kationenleitende Elektrolyt ist ein Polymer, beispielsweise entsprechend modifiziertes Nafion® , PEAK® oder GORE® , ein kationen- und/oder protonenleitender keramischer Werkstoff oder entsprechend modifizierter Kohlenstoff, beispielsweise mit Metallen dotierter Graphit.

Die Reformierungseinheiten 3 umfassen einen entsprechenden Reformierungskatalysator, beispielsweise Kupfer oder ein Kupfer enthaltendes Material. Der weitere Aufbau der Reformierungseinheit ist beliebig und hängt vom Einsatzgebiet der Brennstoffzelle ab, beispielsweise in stationären oder mobilen Systemen. Natürlich kann die Reformierungseinheit 3 auch eine nicht dargestellte, an sich bekannte Verdampfungseinheit für die zu reformierenden Edukte umfassen, wie sie etwa in den deutschen Patentschriften DE 195 34 433 CI und DE 197 20 294 C1 beschrieben ist.

Zwischen den Einheitszellen 5 ist je eine weitere Reformierungseinheit 3 angeordnet. Aber es sind auch andere, dem Durchschnittsfachmann bekannte, konstruktive Lösungen möglich, wie beispielweise wärmeleitende plattenförmige Körper und dergleichen.

Mit der erfindungsgemäßen Brennstoffzelle 1 kann die Brennstoffzellenabwärme direkt von den Reformierungseinheiten 3 genutzt werden und stellt keinen energetischen Verlust des Gesamtsystems dar. In mobilen Systemen wird so beispielsweise ein Fahrzeugkühler entlastet. Ein zusätzlicher Kühlkreislauf wie bei herkömmlichen Brennstoffzellen entfällt bei der erfindungsgemäßen Brennstoffzelle, wodurch der energetische Wirkungsgrad des gesamten Brennstoffzellensystems gesteigert wird.

Die Brennstoffzelle 1 wird bei ca. 100 bis 200 °C betrieben, da nahezu die gesamte Abwärme den Reformierungseinheiten 3 zugeführt wird. Dies führt zu einer verminderten Sensibilität der Elektroden gegenüber CO, da die Bildung von CO-Oberflächenlagen zurückgedrängt wird und auch weniger CO entsteht.

Aufgrund der entsprechenden, vergleichsweise niederen Betriebstemperatur in der Reformierungseinheit sinkt als Folge davon die Austrittskonzentration an CO. Eine nachgeschaltete Gasreinigungseinheit, beispielsweise mittels selektiver Oxidation, ist damit unnötig. Dies führt zu einer weiteren vorteilhaften Systemvereinfachung.

Die Reformierungseinheiten 3 werden somit bei niedrigeren Temperaturen als in anderen bekannten Brennstoffzellentypen mit rein protonenleitenden Elektrolytmembranen betrieben. Zwar vergrößert sich dadurch die erforderliche Katalysatormenge durch eine langsamere Reaktionskinetik, dies bewirkt jedoch auch eine Reduzierung der Katalysatorbelastung ("turnover rate", Umsatz pro Katalysatormenge). Beides führt zu einer Verbesserung des Alterungsverhaltens des Reformierungskatalysators.

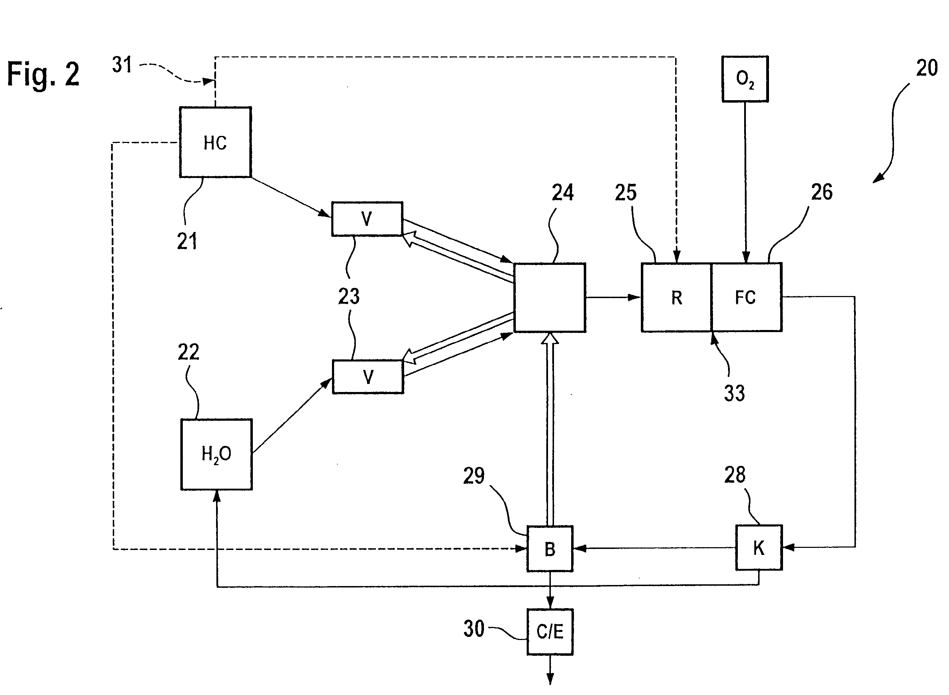

In Fig. 2 ist ein Funktionsschema eines erfindungsgemäßen Brennstoffzellensystems 20 gezeigt. Die einfach durchgezogenen Pfeile stellen einen Stofftransport, die Doppelpfeile einen Energietransport dar.

Das Brennstoffzellensystem 20 weist ein Kohlenwasserstoffreservoir ("HC") 21 und ein Wasserreservoir ("$H_2O$") 22 auf. Ein Kohlenwasserstoff und Wasser werden getrennt voneinander in zwei Verdampfern 23 in den dampfförmigen Zustand überführt.

Selbstverständlich ist auch eine gemeinsame Verdampfung von Wasser und Kohlenwasserstoff in einem oder mehreren Verdampfern 23 möglich. Anschließend werden die vereinigten Dämpfe einem Überhitzer 24 und nachfolgend einer Reformierungseinheit 25 zugeführt. Genauso ist auch eine direkte Zuführung der Dämpfe zur Reformierungseinheit 25 ohne einen Überhitzer 24 möglich. Ebenso kann auch nur ein Edukt dampfförmig und das andere in flüssigem Zustand der Reformierungseinheit 25 zugeführt werden. Selbstverständlich können in einer weiteren Ausführungsform auch mehrere Reformierungseinheiten 25 vorgesehen sein.

Die Reformierungseinheit 25 steht über den Kontaktbereich 33 in indirektem wärmeleitenden Kontakt mit einer Einzelzelle 26 mit kationenleitender Elektrolytmembran. Dies kann, wie vorstehend im Zusammenhang mit Fig. 1 erläutert, auf unterschiedliche Art und Weise erfolgen. Selbstverständlich ist auch eine frei wählbare Abfolge mehrerer Reformierungseinheiten 25 und Einzelzellen 26 möglich. Das bei der Brennstoffzellenreaktion entstehende Produktgas wird einem Kondensator 28 zugeführt, der das darin enthaltende Wasser abtrennt und dem Wasserreservoir 22 zuleitet. In dem Produktgas der Reformierungseinheit befinden sich herkömmlicherweise bis zu 2 Vol%. CO, bei dem erfindungsgemäßen Brennstoffzellensystem 20 jedoch nur noch 0,2 bis 0,3 Vol%. Dieses kann in einem optionalen katalytischen Brenner ("K") 29 weiter umgesetzt werden. Von dort gelangt das Abgas in einen Kompressor/Expander ("C/E") 30 und anschließend in die Umwelt.

Es ist nun weiter möglich, das erfindungsgemäße Brennstoffzellensystem 20 über die durch den gestrichelten Pfeil dargestellte Reaktionsführung 32 kalt zu starten:

Dabei wird der Kohlenwasserstoff im katalytischen Brenner 29 umgesetzt, der die dadurch entstehende Reaktionswärme mittels an sich bekannter Maßnahmen dem Überhitzer 24 und/oder dem bzw. den Verdampfern 23 zuführt, wodurch die Reformierungsreaktion ohne Energieverlust gestartet werden kann.

Weiter ist vorgesehen, die Reformierungseinheit 25 zunächst als einen an sich bekannten POX-Reaktor zu betreiben. Der Reformierungseinheit 25 wird dabei vorher verdampftes Edukt, beispielsweise ein Kohlenwasserstoff oder ein Kohlenwasserstoff/Wasser-Gemisch, zugeführt. Anschließend wird durch eine exotherme partielle Oxidationsreaktion des Kohlenwasserstoffes gemäß Gleichung (II) das Brennstoffzellensystem 20 auf Betriebstemperatur gebracht.

Ein weiterer Vorteil des erfindungsgemäßen Brennstoffzellensystems 20 besteht darin, daß die Reformierungseinheit 3 auch mit einem vollständigen Umsatz des Brennmittels betrieben werden kann. In diesem Fall kann das nach der Reformierungseinheit 3 im Reformat verbleibende Brennmittel entweder auskondensiert und somit zurückgewonnen werden. Oder das nicht umgesetzte Brennmittel wird mit dem Reformat in die Brennstoffzelle 26 geführt, wo es aufgrund der erhöhten Betriebstemperatur direkt umgesetzt wird. Wird beispielsweise Methanol als Brennmittel eingesetzt, so entspricht dies einem teilweisen Betrieb als Direkt-Methanol-Brennstoffzelle (DMFC). Diese Betriebsweise mit einem unvollständigen Brennmittelumsatz weist außerdem den Vorteil auf, daß bei Überlastbetrieb der Reformierungseinheit 3 weniger Kohlenmonoxid produziert wird, weil sich das chemische Gleichgewicht nicht einstellen kann.

Zur Vereinfachung des Aufbaus kann das Brennstoffzellensystem 20 auch bei Umgebungsdruck betrieben werden. Dadurch könnte die Kompressor/Expander ("C/E") 30 wegfallen. Dies wäre zum einen hinsichtlich der Kosten vorteilhaft. Gleichzeitig würde auch die Gefahr verringert, daß die zuvor verdampften Edukte in der Reformierungseinheit 3 durch den thermischen Kontakt mit dem Kathodenraum der Brennstoffzelle 26 auskondensieren.

**Patentansprüche**

1. Brennstoffzelle (1) mit wenigstens einer internen Reformierungseinheit (3), wobei die Brennstoffzelle (1) mindestens eine Einzelzelle (2) enthält, die eine Elektrolytmembran, eine Anode und eine Kathode umfaßt, wobei die Einzelzelle (2) mit der Reformierungseinheit (3) in indirektem thermischen Kontakt steht.
   **dadurch gekennzeichnet,**

**daß** die Elektrolytmembran kationenleitend ist.

2.  Brennstoffzelle, nach Anspruch 1, **dadurch gekennzeichnet, daß** die Elektrolytmembran bis 300 °C temperaturstabil ist.

3.  Brennstoffzelle nach Anspruch 1 oder 2, **dadurch gekennzeichnet, daß** die Elektrolytmembran protonenleitend ist.

4.  Brennstoffzelle nach Anspruch 3, **dadurch gekennzeichnet, daß** die Elektrolytmembran ein Polymer umfaßt.

5.  Brennstoffzelle nach Anspruch 3, **dadurch gekennzeichnet, daß** die Elektrolytmembran Kohlenstoff und/oder keramische Werkstoffe umfaßt.

6.  Brennstoffzelle nach einem der vorhergehenden Ansprüche, **dadurch gekennzeichnet, daß** die Brennstoffzelle (1) wenigstens eine Einheitszelle (5) umfaßt, die eine zwischen zwei Reformierungseinheiten (3) angeordnete Einzelzelle (2) umfaßt.

7.  Brennstoffzelle nach einem der Ansprüche 1 bis 5, **dadurch gekennzeichnet, daß** die Brennstoffzelle (1) wenigstens eine Einheitszelle (5) umfaßt, die eine zwischen zwei Einzelzellen (2) angeordnete Reformierungseinheit (3) umfaßt.

8.  Brennstoffzelle nach Anspruch 6 oder 7, **dadurch gekennzeichnet, daß** die Brennstoffzelle (1) wenigstens zwei Einheitszellen (5) umfaßt.

9.  Brennstoffzelle nach einem der vorhergehenden Ansprüche, **dadurch gekennzeichnet, daß** die Reformierungseinheit (3) für die Durchführung einer Dampfreformierungsreaktion und für die Durchführung einer partiellen Oxidationsreaktion ausgelegt ist.

10. Kraftfahrzeug mit einer Brennstoffzelle nach einem der vorhergehenden Ansprüche.

## Fig. 1

Fig. 2

EP 1 172 876 A2